# EUROPEAN PATENT APPLICATION

(11) **EP 0 525 298 A1**
(43) Date of publication of application: **03.02.1993**
(21) Application number: 92105129.8
(22) Date of filing: 25.03.1992
(51) Int. Cl.: H04B 1/40, H04M 1/72

(54) **Portable radiotelephone**

(30) Priority: 31.07.1991 JP 213111/91
(71) Applicant: TECHNICAL ASSOCIATE CO., LTD., Chiyoda-ku, Tokyo 101 (JP)
(72) Inventor: Iizuka, Souichi, Tokyo 156 (JP); Yamada, Yasuharu, Chiba-ken 281 (JP); Ishikawa, Motoaki, Tokyo 176 (JP)
(74) Representative: Goddar, Heinz J., Dr.

(57) **Abstract**

The portable radiotelephone capable of reducing the power consumption and using for a long period of time. The portable radiotelephone comprising first and second microprocessor units (22, 23) for controlling a receiving portion (20) and a sending portion (21), a main power supply (26) for supplying a main power to the sending portion (21) and the second microprocessor unit (23) and a secondary power supply unit (27) for supplying a small amount of power to the receiving portion (20) and the first microprocessor unit (22) when the portable radiotelephone is on standby.

## Description

The present invention relates to a portable radiotelephone capable of reducing a power consumption to the great extent at the standby state and adapted for a long term of use.

A conventional portable radiotelephone of this type is miniaturized as a whole in view of carrying thereof with ease whereby a cell housed therein is compact and small in capacity.

It is essential that a power supply switch of the radiotelephone is always turned on so that a user of the radiotelephone can answer the phone right away.

The conventional radiotelephone had a problem in that much power supply was consumed at the standby state which involves the short period time of use thereof since the power supply is always supplied to both a receiving portion and a sending portion of the radiotelephone every time the power supply switch is turned on. There was also a problem of inferior operation property since the cell should be charged many times.

The present invention has been made in view of the problems of the conventional radiotelephone and to provide a portable radiotelephone capable of reducing the power consumption to the great extent at the standby state and adapted for a long term of use.

To achieve the above object, the portable radiotelephone comprises a body, a receiving portion in the body, a first microprocessor unit connected to the receiving portion for controlling the receiving portion, a sending portion in the body, a second microprocessor unit connected to the sending portion for controlling the sending portion, a main power supply in the body connected to the sending portion and the second microprocessor unit for supplying a main power to the sending portion and the second microprocessor unit and a secondary power supply in the body connected to the receiving portion and the first microprocessor unit for supplying a second power to both the receiving portion and the first microprocessor unit when the portable radiotelephone is on standby.
Fig.1 is a perspective view of a portable radiotelephone according to a preferred embodiment of the present invention; and
Fig. 2 is a block diagram showing a circuit of the portable radiotelephone of Fig. 1.

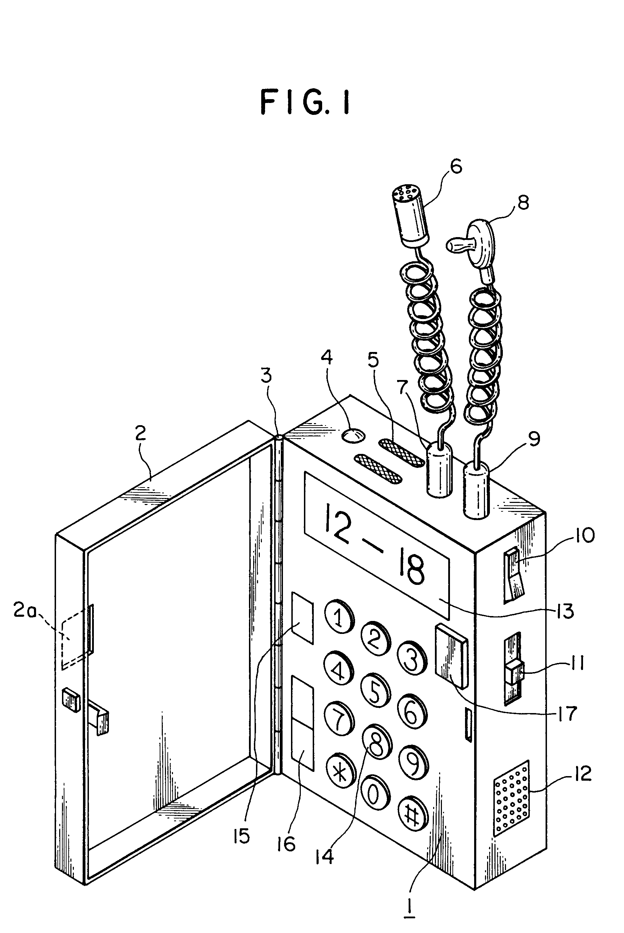

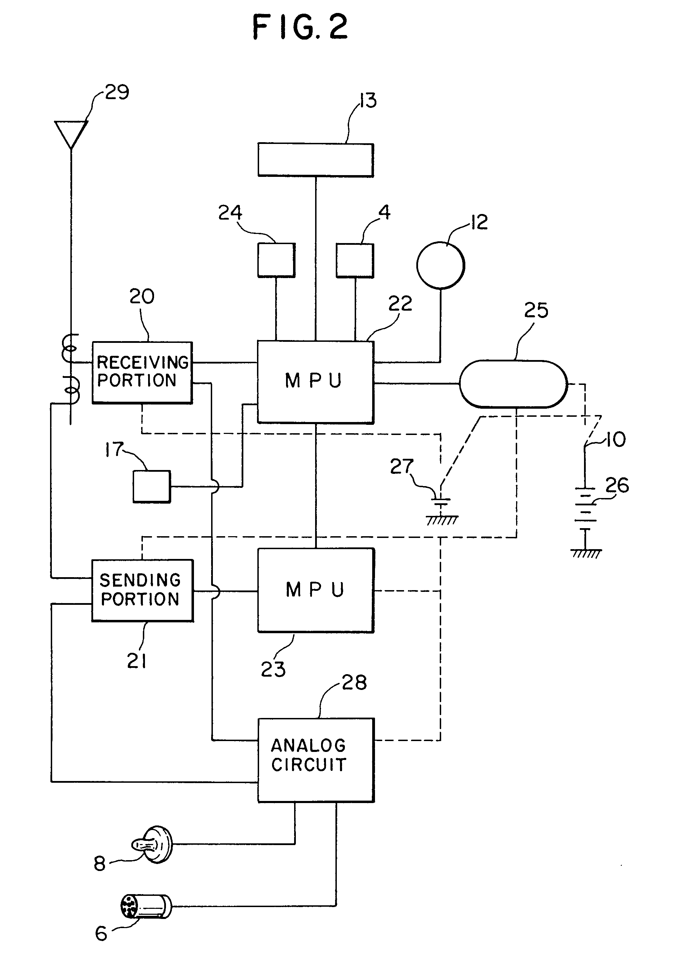

A portable radiotelephone according to a preferred embodiment of the present invention will be described with reference to Figs. 1 and 2.

Fig. 1 is the perspective view of the portable radiotelephone wherein a protecting cover is closable relative to a body of the portable radiotelephone and Fig. 2 is a block diagram showing the circuit of the portable radiotelephone.

In Fig. 1, the portable radiotelephone comprises the body 1 which is small-sized and flat box- shaped and the protecting cover 2 hinged to the body 1 by a hinge 3 to be closable relative to the body 1.

The body 1 has a phone call indication lamp 4 for informing the user of the phone call by a flashing light, a built-in microphone 5 of high sensitivity, a microphone terminal 7 to be connected to an external microphone 6 which is attached to a collar of a suit, an earphone terminal 9 to be connected to an earphone 8 respectively provided at the upper surface thereof. The body 1 further has a power supply switch 10, a phone call detection switching switch 11 and a buzzer 12 for informing the user of the phone call by a sound respectively provided at the side surface thereof.

The body 1 still further has a liquid crystal display (hereinafter referred to as LCD) 13 for indicating the receiving time of the phone call, a ten key 14 for calling a phone, an indication switching switch 15 for switching the indication of the LCD 13, a volume switch 16 for adjusting the volume of the earphone 8 and an access switch 17 respectively provided at the front surface thereof. The protecting cover 2 has an opening 2a through which the access switch 17 can be operated even if the protecting cover 2 is closed.

The circuit as illustrated in Fig. 2 is incorporated in the body 1.

A first microprocessor unit 22 is connected at an input portion thereof to a receiving portion 20 in the body 1 for controlling the receiving portion 20 while a second microprocessor unit 23 is connected at an input portion thereof to a sending portion 21 in the body 1 for controlling the sending portion 21. The ten key 14 is connected also at the input portion of the first microprocessor unit 22 while a vibration generator 24 for informing the user of the phone call by the vibration and a power switch 25 are respectively connected to the output portion of the first microprocessor unit 22 as well as the phone call indication lamp 4 and the buzzer 12.

A main power supply 26 is provided in the body 1 for driving the entire circuit of the body 1. In addition to the main power supply 26, a secondary power supply 27 is provided in the body 1 and connected to the receiving portion 20 for supplying a small amount of power to the receiving portion 20. When the portable radiotelephone is on standby, the small amount of power is supplied from the secondary power supply 27 to both the receiving portion 20 and the first microprocessor unit 22 by way of the power switch 10.

The second microprocessor unit 23 is connected at the input portion thereof to the sending portion 21 for controlling the sending portion 21. The external microphone 6 and the earphone 8 are respectively connected to the receiving portion 20 and the sending portion 21 by way of an analog circuit 28 while an antenna 29 is connected to the receiving portion 20 and the sending portion 21. When the power switch 25 is turned on, the main power is supplied from the main power supply 26 to the sending portion 21, the second microprocessor unit 23 and the analog circuit 28.

An operation of the portable radiotelephone according to the present invention will be described hereinafter.

When the power switch 10 is turned on, the small amount of power is supplied from the second supply 27 to the receiving portion 20 and the first microprocessor unit 22. As a result, the portable radiotelephone is rendered to be in the receiving state. Since the receiving portion 20 consumes a small amount of power compared with the sending portion 21, the receiving portion 20 can stand by for a long period of time even in the receiving state.

When the phone call signal is issued, the receiving portion 20 receives the phone call signal which is supplied to the phone call detection portion. The phone call detection portion is actuated, upon reception of the phone call signal, to thereby operate the vibration generator 23 or the phone call indication lamp 4 or the buzzer 12 each previouly selected by the phone call detection switching switch 11. As a result, the phone call is informed to the user by the vibration or the light or the sound.

The user presses the access switch 17, upon confirmation of the phone call by the vibration or the light or the sound, so that the power switch 25 is turned on whereby the main power is supplied from the main power supply 26 to the sending portion 21, the second microprocessor unit 23 and the anlog circuit 28. As a result, the portable radiotelephone is rendered to be in the sending/receiving state. At this state, the user holds the earphone 8 to his ear and starts to talk over the phone. Since the speech by the user is sent to the sending portion 21 from the built-in microphone 5 by way of the analog circuit 28 and then transmitted by the antenna 29, the user can talk over the phone call without resorting to his hands while the body 1 is put into his pocket.

When the user is difficult to talk over using the built-in microphone 5 due to external noise, the external microphone 6 is connected to the external microphone terminal 7 whereby the user can talk over the phone without being influenced by the external noise. Furthermore, since the receiving time of the phone call is indicated in the LCD 13, the user can confirm the presense of the phone call and the receiving time of the phone call by the LCD 13 even if the user is not aware of the phone call when the portable radiotelephone is detached from the user. When the user completed the phone call, he turns off the power switch 25 by pressing the access switch 17 whereby the portable radiotelephone is returned to the receiving state. As a result, it is possible to reduce the amount of power to be consumed to the great extent.

As is mentioned in detail above, inasmuch as the portable radiotelephone of the present invention comprises the first microprocessor unit connected to the receiving portion and the second microprocessor unit connected to the sending portion, the second power supply connected to the receiving portion which is also connected to the main power supply wherein the small amount of power is supplied from the second power supply to only the receiving portion and the first microprocessor unit at the standby state, it is possible to reduce the power consumption at the standby state compared with the conventional system where the power is supplied to both the receiving and sending portions at the standby state.

It is therefore possible to use the portable radiotealephone for a long period of time and improve the operation property because the user can confirm the phone call by the vibration or the light or the sound to thereby answer the phone.

The user can talk over the phone when he is at work since the user can talk over the phone by using the earphone without resorting to his hands. The user also can talk over the phone by using the external microphone without being influenced by the external noise.

The features disclosed in the foregoing description, in the claims and/or in the accompanying drawings may, both, separately and in any combination thereof, be material for realising the invention in diverse forms thereof.

## Claims

1. A portable radiotelephone comprising:
a body (1);
a receiving portion (20) in the body (1);
a first microprocessor unit (22) connected to the receiving portion (20) for controlling the receiving portion (20);
a sending portion (21) in the body (1);
a second microprocessor unit (23) connected to the sending portion (21) for controlling the sending portion (21);
a main power supply (26) in the body (1) connected to the sending portion (21) and the second microprocessor unit (23) for supplying a main power to both the sending portion (21) and the second microprocessor unit (23); and
a secondary power supply (27) in the body (1) connected to the receiving portion (20) and the first microprocessor unit (22) for supplying a second power to both the receiving portion (20) and the first microprocessor unit (22) when the portable radiotelephone is on standby.

2. A portable radiotelephone according to Claim 1, wherein the body (1) further comprises at least a vibration generator (24), an indication lamp (4) or a buzzer (12) each connected to the first microprocessor unit (22) for informing a user of a phone call.

3. A portable radiotelephone according to Claim 1, wherein the body (1) further comprises a built-in microphone (5), an external microphone terminal (7) to be connected to an external microphone (6) and an earphone terminal (9) to be connected to an earphone (8).
